# EUROPEAN PATENT APPLICATION

(11) **EP 4 757 024 A1**
(43) Date of publication of application: **10.06.2026**
(21) Application number: 25197594.2
(22) Date of filing: 22.08.2025
(51) Int. Cl.: H01M 50/204, H01M 50/271

(54) **BATTERY PACK AND METHOD FOR ASSEMBLING SAME, AND ELECTRIC DEVICE**

(30) Priority: 06.12.2024 CN 202411795139
(71) Applicant: Xiaomi EV Technology Co., Ltd., Beijing 100176 (CN)
(72) Inventor: XIONG, Jinghui, Beijing, 100176 (CN)
(74) Representative: Stöckeler, Ferdinand

(57) **Abstract**

The present invention relates to a battery pack and a method for assembling the same and a powered device. The battery pack includes a battery module (1), a case (2), a glue filling structure (3), and a gas guide (4), where the case (2) is provided with an accommodating cavity (21); the battery module (1) is disposed in the accommodating cavity (21); a filling cavity (5) is formed between the battery module (1) and at least part of a side wall (22) of the case (2); the glue filling structure (3) includes a first glue filling portion (31) disposed in the accommodating cavity (21); a gap (6) is formed between a top surface of the first glue filling portion (31) and a top surface of the filling cavity (5); the gas guide (4) includes a first gas guide (41) disposed in the gap (6); and the first gas guide (41) is configured to store gas and/or guide gas within the battery pack to an exterior of the battery pack.

## Description

### TECHNICAL FIELD

The present invention relates to the technical field of a battery pack, in particular to a battery pack and a method for assembling the same, and a powered device.

### BACKGROUND

A battery pack is a device used to provide energy to an electric device such as a vehicle, and is a core component of the electric device. In the related art, after the battery pack is subjected to a potting operation, a bonding area between a glue filling structure and an inside of a case of the battery pack is insufficient, which is not conducive to improving the strength and rigidity of the battery pack.

### SUMMARY

The present invention provides a battery pack and a method for assembling the same, and a powered device to at least partially solve the problems existing in the related art.

According to a first aspect of the present invention, a battery pack is provided and includes:
a battery module;
a case provided with an accommodating cavity, where the battery module is disposed in the accommodating cavity, and a filling cavity is formed between the battery module and at least part of a side wall of the case;
a glue filling structure, including a first glue filling portion disposed in the filling cavity, where a gap is formed between a top surface of the first glue filling portion and a top surface of the accommodating cavity; and
a gas guide, including a first gas guide disposed in the gap, where the first gas guide is configured to store gas and/or guide gas within the battery pack to an exterior of the battery pack.

Optionally, a height of a top surface of the first gas guide is higher than a height of a top surface of the battery module; and/or
a height of a bottom surface of the first gas guide is lower than a height of a top surface of the battery module.

Optionally, the case includes a lower housing and an upper cover connected with a connecting surface located at an upper end of the lower housing; and
a height of a top surface of the first gas guide is higher than a height of the connecting surface, and a part of an inner wall of the upper cover is configured as the top surface of the accommodating cavity.

Optionally, the first gas guide is disposed as a compressible member and abuts between the upper cover and the first glue filling portion in a compressed state in a height direction of the battery pack.

Optionally, an exhaust port is formed in the case and configured to communicate with an exhaust passage of the first gas guide.

Optionally, the case includes a bottom plate and a frame disposed on the bottom plate; and
the gap is located between the frame and the battery module, and the frame is provided with the exhaust port.

Optionally, a distance between the top surface of the first glue filling portion and the top surface of the accommodating cavity is 5-10 mm.

Optionally, the first gas guide is adhered to the top surface of the first glue filling portion, or the first gas guide is adhered to an inner wall of an upper cover of the case.

Optionally, a lower end of the first gas guide abuts against the top surface of the first glue filling portion.

Optionally, the battery pack further includes a second glue filling portion and a second gas guide;
both the second glue filling portion and the second gas guide are disposed between a top surface of the battery module and an upper cover of the case; and
the second gas guide is connected to the first gas guide such that a gas passage of the second gas guide can communicate with a gas passage of the first gas guide.

Optionally, a plurality of second gas guides are provided and are arranged between the top surface of the battery module and the upper cover at intervals; and
the second glue filling portion includes a plurality of sub glue filling portions, and one of the sub glue filling portions is disposed between every two adjacent second gas guides.

Optionally, a sum of areas of projections of the plurality of sub glue filling portions in a height direction of the battery pack is A1, an area of a projection of the top surface of the battery module in the height direction of the battery pack is A2, and the A1 and the A2 satisfy: A1≥0.9A2.

Optionally, the plurality of second gas guides are disposed at intervals in a first direction;
the gap includes two first gaps arranged at two sides of the battery pack located in a second direction;
the first gas guide is arranged inside the two first gaps, and the sub glue filling portions are also disposed between the first gas guide and the second gas guides in the first direction; and
both ends of the plurality of second gas guides in the second direction are connected to the first gas guide, and the first direction intersects with the second direction.

Optionally, the gap further includes two second gaps arranged on both sides of the battery pack in the first direction; and
the first gas guide is disposed inside the two second gaps.

Optionally, the two first gaps and the two second gaps are connected to each other to be configured as an annular gap; and
the first gas guide is an annular member, or the first gas guide is formed by splicing a plurality of first sub gas guides.

Optionally, the second gas guide is adhered to the top surface of the battery module, or the second gas guide is adhered to an inner wall of the upper cover of the case.

Optionally, the gas guide is provided with a gas passage; and
the gas passage is configured to allow gas to flow through, and/or the gas passage is configured to store gas.

Optionally, the gas guide is a foam member provided with a plurality of gas holes, and the gas holes are configured as the gas passage.

Optionally, the foam member has a porosity of 85% or more.

According to a second aspect of the present invention, an electric device is provided and includes the battery pack as described above.

According to a third aspect of the present invention, a method for assembling a battery pack is provided and includes:
providing a battery module, a glue, a first gas guide and a case, where the case is provided with an accommodating cavity;
mounting the battery module in the accommodating cavity, where a filling cavity is formed between the battery module and at least part of a side wall of the case;
filling the glue into the filling cavity to form a first glue filling portion within the filling cavity; and
arranging the first gas guide in a gap between a top surface of the first glue filling portion and a top surface of the accommodating cavity, where the first gas guide is configured to store gas and/or guide gas within the battery pack to an exterior of the battery pack.

Optionally, the case includes a lower housing and an upper cover configured to define the accommodating cavity together with the lower housing, and
arranging the first gas guide in the gap between the top surface of the first glue filling portion and the top surface of the accommodating cavity includes:
first arranging the first gas guide on the top surface of the first glue filling portion, and then connecting the upper cover to the lower housing, where a part of an inner wall of the upper cover is configured as the top surface of the accommodating cavity; or
first arranging the first gas guide on an inner wall, configured as the top surface of the accommodating cavity, of the upper cover, and then connecting the upper cover to the lower housing.

Optionally, the method further includes:
providing a second gas guide;
arranging the second gas guide in a gap between a top surface of the battery module and the top surface of the accommodating cavity, and allowing a gas passage of the second gas guide to communicate with a gas passage of the first gas guide; and
filling a glue into the gap between the top surface of the battery module and the top surface of the accommodating cavity to form a second glue filling portion.

Optionally, the case further includes an upper cover and a lower housing, where the upper cover and the lower housing can jointly define the accommodating cavity, and
arranging the second gas guide in the gap between the top surface of the battery module and the top surface of the accommodating cavity includes:
first arranging the second gas guide on the top surface of the battery module, and then connecting the upper cover to the lower housing, where a part of an inner wall of the upper cover is configured as the top surface of the accommodating cavity; or
first arranging the second gas guide on an inner wall, configured as the top surface of the accommodating cavity, of the upper cover, and then connecting the upper cover to the lower housing.

Optionally, a plurality of second gas guides are provided and are arranged between the top surface of the battery module and the top surface of the accommodating cavity at intervals in a first direction, and
filling the glue into the gap between the top surface of the battery module and the top surface of the accommodating cavity includes:
filling the glue into a gap between every two adjacent second gas guides; and
filling the glue into a gap between the first gas guide and the second gas guides in the first direction.

Through the above technical solution, the first gas guide is disposed in the gap between the top surface of the first glue filling portion and the top surface of the filling cavity, and the first gas guide is configured to store gas and/or guide gas within the battery pack to the exterior of the battery pack. Thus, in the glue filling process of the battery pack, air in the accommodating cavity can be stored inside the first gas guide or discharged to the exterior of the battery pack through the first gas guide, so that the phenomenon of "gas trapping" is not likely to occur in the accommodating cavity, which is beneficial to reliably bonding the battery module and the case through the glue filling structure, and the bonding area is large, which is beneficial to improving the strength and rigidity of the battery pack.

It should be understood that the above general description and the following detailed description are examples and explanations only and cannot limit the present invention.

### BRIEF DESCRIPTION OF DRAWINGS

The drawings here are incorporated into and constitute part of the description, illustrating embodiments conforming to the present invention, and are used together with the description to explain the principles of the present invention.
FIG. 1 is a schematic top view of a battery pack according to an example of the present invention, where an upper cover is not shown.
FIG. 2 is an enlarged view of A in FIG. 1.
FIG. 3 is a schematic cross-sectional view of the battery pack according to an example of the present invention.
FIG. 4 is an enlarged view of B in FIG. 3.
FIG. 5 is a schematic flowchart of a method for assembling a battery pack according to an example of the present invention.
FIG. 6 is a block diagram of a case according to an example of the present invention.
FIG. 7 is a block diagram of a gas guide according to an example of the present invention.
FIG. 8 is a block diagram of an electric device according to an example of the present invention.

### DETAILED DESCRIPTION OF EMBODIMENTS

Example embodiments of the present invention are described in detail below with reference to the accompanying drawings. It should be understood that the specific embodiments described here are only used to illustrate and explain the present invention, and are not used to limit the present invention.

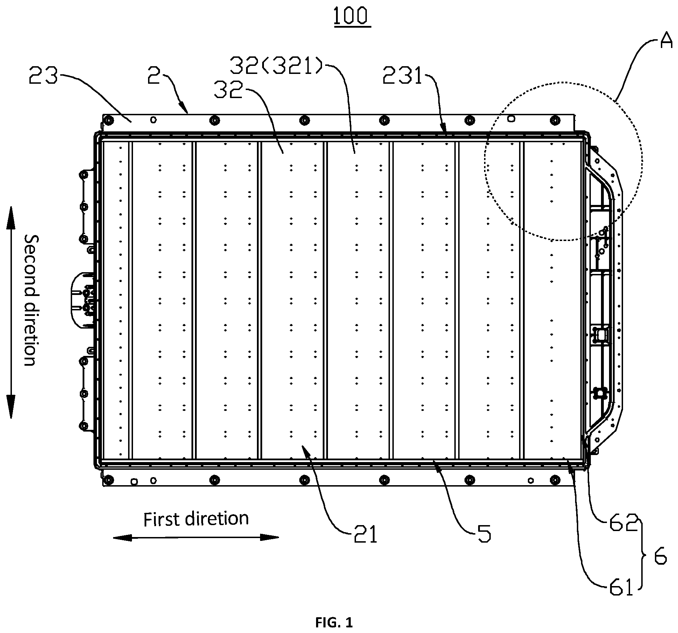

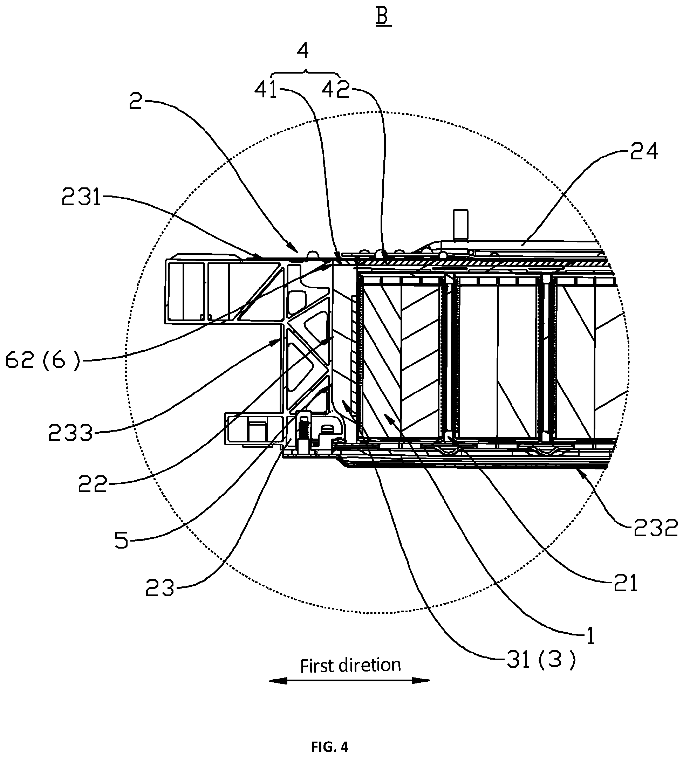

In the present invention, unless otherwise specified, the orientation or position relation indicated by orientation terms such as "upper," "lower," "left," "right," "first direction," and "second direction" is defined based on the orientations of the drawings shown in the drawings, only for the convenience of describing the present invention and simplifying the description, rather than indicating or implying that the device or element referred to must have a particular orientation, and be constructed and operated in a particular orientation, and thus should not be construed as limiting the present invention, and the terms "inside and outside" refer to the inside and outside of the corresponding structural contour. For example, the "first direction" may be a width direction of the battery pack and the "second direction" may be a length direction of the battery pack, which is shown in FIGS. 1 and 4 for details and is not limited in the present invention.

In addition, it should be noted that the terms such as "first" and "second" are used to distinguish one element from another and do not have a sequence or an importance. Furthermore, in the description with reference to the drawings, the same reference numerals in different drawings represent the same elements.

In the description of the present invention, it should also be noted that unless expressly specified and limited otherwise, the terms "disposed," "connection," "connected," and "mounted" should be understood in a broad sense. For example, it can be fixed connection, detachable connection or integrated connection; and it can be a direct connection or indirect connection through an intermediate medium. The specific meanings of the above terms in the present invention can be understood according to specific circumstances by those of ordinary skill in the art.

In the related art, after the battery pack is subjected to a potting operation, a phenomenon of "gas trapping" is easy to occur between a cover body and a housing of the battery pack, resulting in an insufficient bonding area between a glue filling structure and an inside of a case of the battery pack, which is not conducive to improving the strength and rigidity of the battery pack.

The phenomenon of "gas trapping" refers to a phenomenon in which gas is accumulated at a bonding interface between a housing of the battery pack and a glue filling structure during the glue filling process, and the gas trapping region forms a gap space inside the glue filling structure, thus causing an actual bonding area between a battery module and the housing to be lower than a preset value.

In the related art, a main object of a glue filling structure injected into a battery pack is to achieve strong binding of internal components of the battery pack with large structural parts such as a case and a top cover by filling and fixing and bonding, so as to achieve the integration and structuring of the battery pack; and at the same time, it is also possible to improve temperature uniformity for whole-pack thermal management, block high temperature when thermal runaway abnormality occurs, and upgrade an insulating capability when the strong electrical connection occurs.

While in the process of injecting the glue filling structure into the interior of the battery pack, if air in a filling cavity cannot be discharged in time, it is easy to cause gas accumulation at a bonding interface between the case of the battery pack and the glue filling structure, resulting in a gas trapping abnormality. If the glue filling structure cannot fill the gas trapping region, then this gas trapping region will form a gap space inside the glue filling structure. This gas trapping abnormality is particularly severe in the case of top cover bonding, causing an actual bonding area between the glue filling structure and the top cover to be lower than a design value, resulting in a decrease in the bonding effect on the top cover, which is not conducive to improving the rigidity and strength of the battery pack.

In view of this, as shown in FIGS. 1 to 4, according to a first aspect of the present invention, a battery pack 100 is provided and includes a battery module 1, a case 2, a glue filling structure 3 and a gas guide 4, where an accommodating cavity 21 is disposed inside the case 2; the battery module 1 is disposed in the accommodating cavity 21; and a filling cavity 5 is formed between the battery module 1 and at least part of a side wall 22 of the case 2, e.g., a gap between a frame 233 of the case 2 and the battery module 1 referred to in the following. The glue filling structure 3 includes a first glue filling portion 31 disposed in the filling cavity 5; a gap 6 is formed between a top surface of the first glue filling portion 31 and a top surface of the filling cavity 5; the gas guide 4 includes a first gas guide 41 disposed in the gap 6; and the first gas guide 41 is configured to store gas and/or guide gas within the battery pack 100 to an exterior of the battery pack 100.

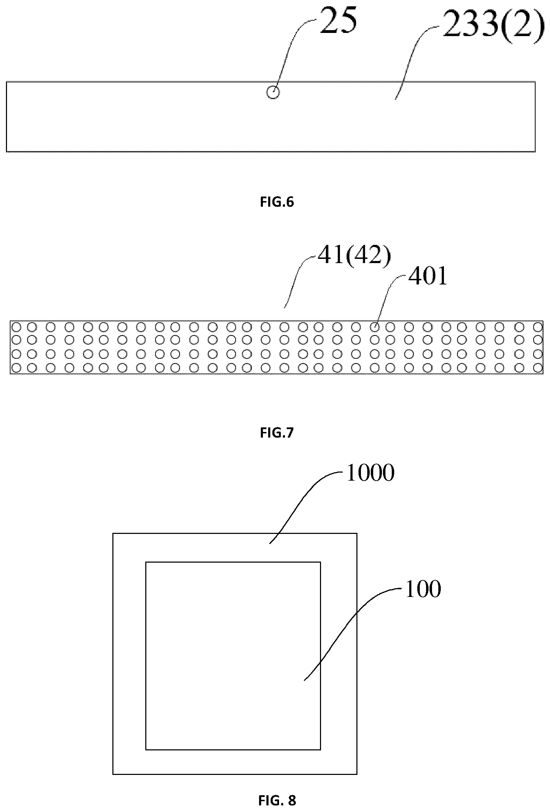

In the case where the battery pack 100 is applied to an electric device 1000 (FIG. 8), the battery module 1 disposed in the battery pack 100 can supply power to the electric device 1000 to drive the operation of a device body in the electric device 1000. For example, the battery pack 100 can be a battery pack of a vehicle.

In the battery pack 100, since the filling cavity 5 is formed between the battery module 1 and at least part of the side wall 22 of the case 2, and the first glue filling portion 31 is disposed in the filling cavity 5, the battery module 1 is connected to the side wall 22 of the case 2 through the first glue filling portion 31. In this way, on the one hand, a cured glue can provide a supporting force to the battery module 1, so that the fixing effect of the battery module 1 in the case 2 is better and the battery module 1 is less likely to shake; on the other hand, in the battery pack 100, the battery module 1 is connected to the side wall 22 of the case 2 through the first glue filling portion 31, and the battery module 1, the first glue filling portion 31, and the side wall 22 of the case 2 cooperate with each other, so that a force transmission path can be formed; a force acting on the battery pack 100 can be jointly transmitted; the rigidity, the strength, and the mode of the battery pack 100 can be improved; and the safety and durability of the battery pack 100 are high.

In addition, because a glue solution has fluidity, by injecting a preset amount of the glue solution into the filling cavity 5, the glue solution can be filled into the filling cavity 5 according to a preset filling height, which is beneficial for overcoming errors in manufacturing and assembling of the components of the battery pack 100.

Through the above technical solution, the first gas guide 41 is disposed in the gap 6 between the top surface of the first glue filling portion 31 and the top surface of the filling cavity 5, and the first gas guide 41 is configured to store gas and/or guide gas within the battery pack 100 to the exterior of the battery pack 100. Thus, in the glue filling process of the battery pack 100, air inside the accommodating cavity 21 can be guided to the first gas guide 41 as the volume of the glue filling structure 3 increases, and can be stored inside the first gas guide 41 or discharged to the exterior of the battery pack 100 under the action of the first gas guide 41, so that gas inside the accommodating cavity 21 does not occupy other spaces inside the battery pack 100 (e.g., the filling cavity 5, etc.), and the phenomenon of "gas trapping" does not easily occur inside the accommodating cavity 21, which is beneficial to reliably bonding the battery module 1 and the case 2 through the glue filling structure 3, and the bonding area is large, which is beneficial to improving the strength and rigidity of the battery pack 100.

Here, it should be noted that the present invention does not limit a specific size of the first gas guide 41, and in an embodiment of the present invention, as shown in FIG. 4, a height of a top surface of the first gas guide 41 is higher than a height of a top surface of the battery module 1, and/or a height of a bottom surface of the first gas guide 41 is lower than a height of a top surface of the battery module 1.

Since the height of the top surface of the first gas guide 41 is higher than the height of the top surface of the battery module 1, the first gas guide 41 can block the glue solution during the glue filling process, effectively avoiding the situation that the glue solution overflows the case 2 of the battery pack 100. For example, the glue solution can be effectively prevented from overflowing to a connecting surface 231 between a lower housing 23 and an upper cover 24 of the battery pack 100, which affects the sealing between the lower housing 23 and the upper cover 24.

The height of the bottom surface of the first gas guide 41 is lower than the height of the top surface of the battery module 1, which is equivalent to defining a mounting groove in which the first gas guide 41 is arranged between the side wall 22 of the case, the top surface of the first glue filling portion 31 and a side wall of the battery module 1 to facilitate the arrangement of the first gas guide 41.

In addition, by reasonably designing the size of the first gas guide 41, the first gas guide 41 can have a certain height; the first gas guide 41 having a certain height can have a larger volume; and the first gas guide 41 having a larger volume can store a larger amount of gas, and/or have a higher gas guiding ability, thus further avoiding the occurrence of the phenomenon of "gas trapping" in the battery pack 100.

It can be understood that in the present invention, the battery module 1 may include a plurality of battery cells arranged in a stack, and in an embodiment in which the battery module 1 includes a plurality of battery cells, the top surface of the battery module 1 refers to top surfaces of the battery cells.

A specific structure of the battery pack 100 is also not limited in the present invention. In some examples, as shown in FIGS. 1 to 4, the case 2 includes the lower housing 23 and the upper cover 24, where the upper cover 24 is connected with the connecting surface 231 located at an upper end of the lower housing 23; the height of the top surface of the first gas guide 41 is higher than a height of the connecting surface 231; and a part of an inner wall of the upper cover 24 is configured as the top surface of the filling cavity 5. Since the height of the top surface of the first gas guide 41 is higher than the height of the connecting surface 231 between the upper cover 24 and the lower housing 23, the first gas guide 41 can block the glue solution during the glue filling process, effectively preventing the glue solution from overflowing to the connection surface 231 between the lower housing 23 and the upper cover 24 of the battery pack 100, affecting the sealing between the lower housing 23 and the upper cover 24.

A sealing method between the lower housing 23 and the upper cover 24 is not limited in the present invention as long as the sealing requirements of the battery pack 100 can be satisfied, and in an embodiment of the present invention, the connecting surface between the lower housing 23 and the upper cover 24 may be connected by a sealant. The sealing between the lower housing 23 and the upper cover 24 which are connected by the sealant is reliable, and the sealing requirements of the battery pack 100 can be satisfied.

In some embodiments of the present invention, a sealing strip may be further disposed on the connecting surface between the lower housing 23 and the upper cover 24. The disassembly between the lower housing 23 and the upper cover 24 which are sealed by the sealing strip is simple and easy to maintain.

In some examples, the first gas guide 41 is disposed as a compressible member, and the first gas guide 41 abuts between the upper cover 24 and the first glue filling portion 31 in a compressed state in a height direction of the battery pack 100. The first gas guide 41 abutting between the upper cover 24 and the first glue filling portion 31 in the compressed state is advantageous for ensuring reliability of positional mounting of the first gas guide 41 and restricting foaming/flowing of the glue as needed.

In order to facilitate the discharge of the gas inside the battery pack 100 to the exterior of the battery pack 100, as shown in FIGS. 6 and 7, the case 2 is in some examples provided with an exhaust port 25 configured to communicate with an exhaust passage 401 of the first gas guide 41. In this way, gas generated during the glue filling process can be discharged to the exterior of the battery pack 100 through the first gas guide 41 and the exhaust port 25 formed in the case 2, further preventing the occurrence of the phenomenon of "gas trapping" in the battery pack 100.

It should be noted that a specific location of the exhaust port 25 in the case 2 of the battery pack 100 is not limited in the present invention, as long as the exhaust port 25 can facilitate the discharge of gas in the battery pack 100. In an embodiment of the present invention, as shown in FIG. 6, the case 2 includes a bottom plate 232 and a frame 233 disposed on the bottom plate 232; the gap 6 is located between the frame 233 and the battery module 1; and the frame 233 is provided with the exhaust port 25. In other words, the exhaust port 25 is disposed in a side portion of the case 2, and the exhaust port 25 disposed in the side portion of the case 2 is less likely to be shielded to facilitate gas discharge.

A size of the first glue filling portion 31 is also not limited in the present invention as long as the first glue filling portion 31 can reliably adhere the battery module 1 to the case 2. In an embodiment of the present invention, a distance between the top surface of the first glue filling portion 31 and a top surface of the accommodating cavity 21 is 5-10 mm.

The distance between the top surface of the first glue filling portion 31 and the top surface of the accommodating cavity 21 is in the range of 5-10 mm, allowing a larger volume of the first gas guide 41 to be filled, thus enabling more gas to be stored, or having a larger exhaust capacity, further avoiding the occurrence of the phenomenon of "gas trapping" in the battery pack 100.

In addition, within the above range, it is also advantageous to make the first glue filling portion 31 have a certain height inside the filling cavity 5 between the side wall 22 of the case 2 and the battery module 1; a contact area between the first glue filling portion 31 and the side wall 22 and the battery module 1 is large; the first glue filling portion 31 having a certain height can provide a large force transmission path between the battery module 1 and a side plate, so that the strength and rigidity of the entire battery pack 100 are improved, effectively avoiding the situation that stress concentration is easy to occur at a bonding position between the first glue filling portion 31 and the side wall 22 and/or the battery module 1 due to a small force transmission path between the battery module 1 and the side plate of the case 2, so that the first glue filling portion 31 is easy to degum.

It should be noted that the present invention also does not limit a specific mounting location of the first gas guide 41 in the battery pack 100. In an embodiment of the present invention, the first gas guide 41 may be bonded to the top surface of the first glue filling portion 31. The installation of the first gas guide 41 adhered to the top surface of the first glue filling portion 31 inside the battery pack 100 is simpler, which is conducive to improving the assembly efficiency of the battery pack 100.

In another embodiment of the present invention, the first gas guide 41 may be adhered to an inner wall of the upper cover 24 of the case 2.

Thus, on the one hand, the first gas guide 41 disposed on the upper cover 24 of the case 2 is not easily contacted with the glue solution during the glue filling process, effectively avoiding the situation that the glue solution adheres to the first gas guide 41, which affects the normal use of the first gas guide 41; on the other hand, the first gas guide 41 arranged on the upper cover 24 of the case 2 is also not affected by the glue filling scheme; the mounting of the first gas guide 41 can be achieved without waiting for the glue solution to solidify; and the versatility is high.

In the battery pack 100 provided by the present invention, a gap may be formed between the first gas guide 41 and the first glue filling portion 31, and the first gas guide 41 may also abut against the first glue filling portion 31, which is not limited in the present invention. In an embodiment of the present invention, a lower end of the first gas guide 41 may also abut against the top surface of the first glue filling portion 31. Since the lower end of the first gas guide 41 abuts against the top surface of the first glue filling portion 31, the first gas guide 41 can be used to restrict foaming and flowing of the glue solution when the glue solution in the first glue filling portion 31 is filled into the filling cavity 5, so that the glue solution in the first glue filling portion 31 can be formed in a preset shape and a preset size, thus satisfying the use requirements of the battery pack 100.

In order to further improve the strength of the battery pack 100, in some examples, as shown in FIGS. 1, 3 and 4, the battery pack 100 may further include a second glue filling portion 32 and a second gas guide 42 which are disposed between the top surface of the battery module 1 and the upper cover 24 of the case 2, where the second gas guide 42 is connected to the first gas guide 41 so that a gas passage 401 of the second gas guide 42 can communicate with a gas passage 401 of the first gas guide 41. In other words, the top surface of the battery module 1 is also connected to the upper cover 24 of the case 2 through the second glue filling portion 32; the bonding area between the battery module 1 and the case 2 is large, and the strength and rigidity of the battery pack 100 are high.

In addition, since the second gas guide 42 is further disposed between the top surface of the battery module 1 and the upper cover 24 of the case 2, and the second gas guide 42 is connected with the first gas guide 41, during glue filling of the second glue filling portion 32, gas can flow to the second gas guide 42 and the first gas guide 41. The second gas guide 42 and the first gas guide 41 can realize gas storage and/or discharge the gas to the exterior of the battery pack 100, effectively avoiding the occurrence of the phenomenon of "gas trapping" caused by the arrangement of the second glue filling portion 32.

In order to improve the gas storage and/or gas guiding effect of the second gas guide 42, in some examples, a plurality of second gas guides 42 are provided; the plurality of second gas guides 42 are arranged at intervals between the top surface of the battery module 1 and the upper cover 24; as shown in FIG. 1, the second glue filling portion 32 includes a plurality of sub glue filling portions 321; and one of the sub glue filling portions 321 is disposed between every two adjacent second gas guides 42. By dividing the second glue filling portion 32 into the plurality of sub glue filling portions 321 having a smaller cross-sectional area and arranging the plurality of second gas guides 42 at intervals between the plurality of sub glue filling portions 321, the gas guiding and/or exhaust effect of the second gas guides 42 can be improved, further avoiding the occurrence of the phenomenon of "gas trapping" in the battery pack 100.

In order to improve the overall strength and rigidity of the battery pack 100, in some examples, a sum of areas of projections of the plurality of sub glue filling portions 321 in the height direction of the battery pack 100 is A1; an area of a projection of the top surface of the battery module 1 in the height direction of the battery pack 100 is A2; and the A1 and the A2 satisfy: A1≥0.9A2. The plurality of sub glue filling portions 321 having a larger area can improve the bonding area between the battery module 1 and the upper cover 24 of the battery pack 100, thus contributing to improving the strength and rigidity of the battery pack 100.

It should be noted that in the battery pack 100 provided by the present invention, the first gas guide 41 and the plurality of second gas guides 42 may be disposed in any suitable orientation as long as the first gas guide 41 and the plurality of second gas guides 42 cooperate with each other to avoid the phenomenon of "gas trapping" of the battery pack 100. In an embodiment of the present invention, the plurality of second gas guides 42 are arranged at intervals in a first direction; the gap 6 includes two first gaps 61; two first gaps 61 are arranged on both sides of the battery pack 100 in a second direction; the first gas guide 41 is arranged inside the two first gaps 61; the sub glue filling portions 321 are also disposed between the first gas guide 41 and the second gas guides 42 in the first direction; both ends of the plurality of second gas guides 42 in the first direction are connected to the first gas guide 41; and the first direction intersects with the second direction.

In this way, the first gas guide 41 disposed in the two first gaps 61 at both sides of the case 2 in the second direction can cooperate with the plurality of second gas guides 42 to store and/or guide out gas generated during the glue filling process, thus avoiding the occurrence of the phenomenon of "gas trapping" in the battery pack 100.

In some examples, as shown in FIG. 1, the gap 6 further includes two second gaps 62 arranged on both sides of the battery pack 100 in the first direction, and the first gas guide 41 is disposed in the two second gaps 62. Since the gap 6 includes the two first gaps 61 located at both sides of the battery pack 100 in the second direction, and the two second gaps 62 arranged on both sides of the battery pack 100 in the first direction, that is, the gap 6 is disposed around the battery module 1 in the battery pack 100, and the first gas guide 41 is disposed in the gap 6, the first gas guide 41 has a long length. The first gas guide 41 having a long length can have a large volume. The first gas guide 41 can store a large amount of gas, and/or has a large exhaust capacity, which is advantageous to further avoid the occurrence of the phenomenon of "gas trapping".

In the present invention, the first gas guide 41 may have any suitable structure, for example, the first gas guide 41 may be formed by splicing a plurality of structures, or the first gas guide 41 may be integrally formed, which is not limited in the present invention. In an embodiment of the present invention, the two first gaps 61 and the two second gaps 62 are connected to each other to be configured as an annular gap, and the first gas guide 41 is an annular member. In other words, the first gas guide 41 is an integrally formed annular member, and the integrally formed first gas guide 41 has high strength and good aesthetic appearance.

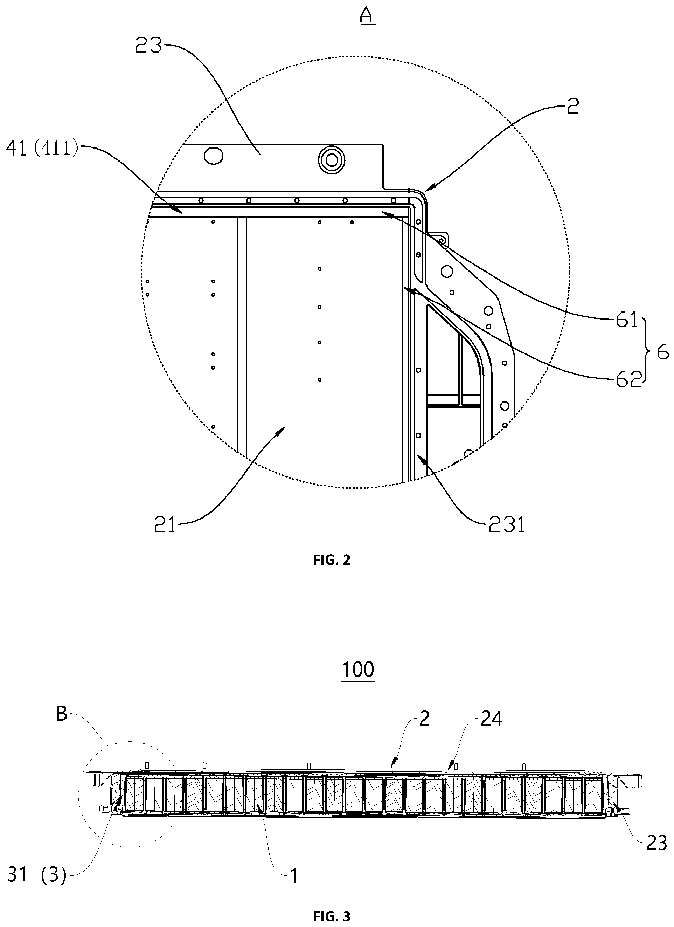

In some embodiments of the present invention, as shown in FIG. 2, the above first gas guide 41 is also formed by splicing a plurality of first sub gas guides 411. The first gas guide 41 which is formed by splicing the plurality of first sub gas guides 411 adopts a modular arrangement, has high flexibility and is easy to assemble.

It should be noted that the present invention also does not limit a specific mounting location of the second gas guide 42 within the battery pack 100. In an embodiment of the present invention, the second gas guide 42 is bonded to the top surface of the battery module 1. The mounting of the second gas guide 42 adhered to the top surface of the battery module 1 inside the battery pack 100 is simpler, which is conducive to improving the assembly efficiency of the battery pack 100.

In some embodiments of the present invention, the second gas guide 42 may also be adhered to the inner wall of the upper cover 24 of the case 2.

Thus, on the one hand, the second gas guide 42 disposed on the upper cover 24 of the case 2 is not easily contacted with the glue solution during the glue filling process, effectively avoiding the situation that the glue solution adheres to the second gas guide 42, which affects the normal use of the second gas guide 42; on the other hand, the second gas guide 42 arranged on the upper cover 24 of the case 2 is also not affected by the glue filling scheme; the mounting of the second gas guide 42 can be achieved without waiting for the glue solution to solidify; and the versatility is high.

Here, it should be noted that the present invention also does not limit the specific structure of the gas guide 4 (e.g., the first gas guide 41 and the second gas guide 42 as described above). In order to enable the gas guide 4 to store gas or guide out gas, in some examples, as shown in FIG. 7, the gas guide 4 is provided with a gas passage 401 configured to allow the gas to flow through, and/or store the gas. In this way, when the gas flows into the gas passage 401, the gas passage 401 can store and/or guide out the gas, thus avoiding the occurrence of the phenomenon of "gas trapping" in the battery pack 100.

Here, it can be understood that the gas guide 4 may refer to one of the first gas guide 41 and the second gas guide 42, or both the first gas guide 41 and the second gas guide 42, which is not limited in the present invention.

A specific type of the gas guide 4 is also not limited by the present invention, as long as the gas guide 4 enables storage and/or guiding out of gas within the battery pack 100. In an embodiment of the present invention, the gas guide 4 is a foam member provided with a plurality of gas holes, and the gas holes are configured as the gas passage 401. The foam member enables the storage of gas and the circulation of gas.

In addition, since the foam member is compressible and has a light weight, the foam member does not impose a burden on a battery assembly when mounted into the battery pack 100. Meanwhile, since the foam member is compressible, a foam member does not interfere with the upper cover 24 when the upper cover 24 of the case 2 is installed, and a normal snap-fit installation of the upper cover 24 can be ensured.

Here, it should be noted that the present invention does not limit a specific material of the foam member, and the material may be, for example, one of a Si-based material, a PU-based material, EPDM (Ethylene Propylene Diene Monomer), CR (Chloroprene rubber), EVA (Ethylene Vinyl Acetate Copolymer) and SBR (Polymerized Styrene Butadiene Rubber).

In some examples, the foam member has a porosity of 85% or more. Foam members with higher porosity have more pores, and thus can store more air and have a greater air circulation capacity.

In some examples, the foam member has a density of 200 kg/m³ or less, and since the density of the foam member is smaller, the weight of the gas guide 4 can be reduced while satisfying the requirements of the battery pack 100, which is advantageous to reduce the weight of the entire battery pack 100 and enable the battery pack 100 to have a larger energy density.

According to a second aspect of the present invention, as shown in FIG.8, an electric device 1000 is provided and includes the battery pack 100 as described above.

The electric device 1000 has all the beneficial effects of the battery pack 100 described above, which will not be described in detail here.

Here, it should be noted that a specific type of the electric device is not limited in the present invention. The electric device 1000 may be a vehicle or other electric devices suitable for using the battery pack, which is not limited in the present invention.

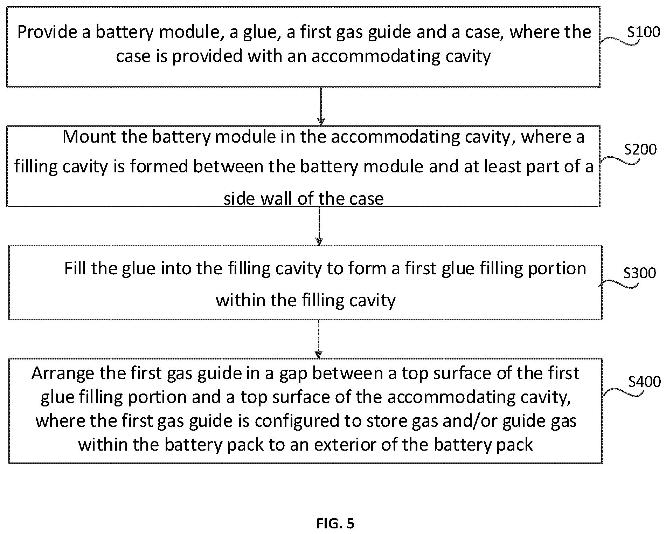

According to a third aspect of the present invention, as shown in FIG. 5, a method for assembling a battery pack is provided. The method may be used for assembly of the battery pack 100, and may include the steps of:
S100: providing a battery module 1, a glue, a first gas guide 41 and a case 2, where the case 2 is provided with an accommodating cavity 21;
S200: mounting the battery module 1 in the accommodating cavity 21, where a filling cavity 5 is formed between the battery module 1 and at least part of a side wall 22 of the case 2;
S300: filling the glue into the filling cavity 5 to form a first glue filling portion 31 within the filling cavity 5; and
S400: arranging the first gas guide 41 in a gap 6 between a top surface of the first glue filling portion 31 and a top surface of the accommodating cavity 21, where the first gas guide 41 is configured to store gas and/or guide gas within the battery pack 100 to an exterior of the battery pack 100.

As mentioned above, through the above technical solution, the first gas guide 41 is disposed in the gap 6 between the top surface of the first glue filling portion 31 and the top surface of the filling cavity 5, and the first gas guide 41 is configured to store gas and/or guide gas within the battery pack 100 to the exterior of the battery pack 100. Thus, the phenomenon of "gas trapping" is less likely to occur, which is beneficial to reliably bonding the battery module 1 and the case 2 through the glue filling structure 3, and the bonding area is large, which is beneficial to improving the strength and rigidity of the battery pack 100.

For an embodiment in which the case 2 includes a lower housing 23 and an upper cover 24, and the upper cover 24 is configured to define the accommodating cavity 21 together with the lower housing 23, in order to arrange the first gas guide 41 in the gap 6 between the top surface of the first glue filling portion 31 and the top surface of the accommodating cavity 21, in an embodiment of the present invention, the step S400 may include:
first arranging the first gas guide 41 on the top surface of the first glue filling portion 31, and then connecting the upper cover 24 to the lower housing 23, where a part of an inner wall of the upper cover 24 is configured as the top surface of the accommodating cavity 21.

In other words, the first gas guide 41 can be first fixed (e.g., adhered) to the top surface of the first glue filling portion 31, and the first gas guide 41 fixed to the top surface of the first glue filling portion 31 can be easily installed in the battery pack 100, which contributes to improving the assembly efficiency of the battery pack 100.

In another embodiment of the present invention, the step S400 of arranging the first gas guide 41 in the gap 6 between the top surface of the first glue filling portion 31 and the top surface of the accommodating cavity 21 may include:
first arranging (e.g., adhering) the first gas guide 41 on an inner wall, configured as the top surface of the accommodating cavity 21, of the upper cover 24, and then connecting the upper cover 24 to the lower housing 23.

Since the first gas guide 41 is arranged on the upper cover, on the one hand, the first gas guide 41 disposed on the upper cover 24 of the case 2 is not easily contacted with the glue solution during the glue filling process, effectively avoiding the situation that the glue solution adheres to the first gas guide 41, which affects the normal use of the first gas guide 41; on the other hand, the first gas guide 41 arranged on the upper cover 24 of the case 2 is also not affected by the glue filling scheme; the mounting of the first gas guide 41 can be achieved without waiting for the glue solution to solidify; and the versatility is high.

In order to further improve the strength of the battery pack 100, in some examples, the above method for assembling a battery pack may further include:
providing a second gas guide 42;
arranging the second gas guide 42 in a gap between a top surface of the battery module 1 and the top surface of the accommodating cavity 21, and allowing a gas passage of the second gas guide 42 to communicate with a gas passage of the first gas guide 41; and
filling a glue into the gap between the top surface of the battery module 1 and the top surface of the accommodating cavity 21 to form a second glue filling portion 32.

In this way, the top surface of the battery module 1 can be connected to the upper cover 24 of the case 2 through the second glue filling portion 32; the bonding area between the battery module 1 and the case 2 is large; and the strength and rigidity of the battery pack 100 are high.

In addition, since the second gas guide 42 is further disposed between the top surface of the battery module 1 and the upper cover 24 of the case 2, and the second gas guide 42 is connected with the first gas guide 41, during glue filling of the second glue filling portion 32, gas can flow to the second gas guide 42 and the first gas guide 41. The second gas guide 42 and the first gas guide 41 can realize gas storage and/or discharge the gas to the exterior of the battery pack 100, effectively avoiding the occurrence of the phenomenon of "gas trapping" caused by the arrangement of the second glue filling portion.

The present invention also does not limit an arrangement order of the second gas guide 42 within the battery pack 100. For an embodiment in which the case 2 includes the lower housing 23 and the upper cover 24, and the upper cover 24 is configured to define the accommodating cavity 21 together with the lower housing 23, for arranging the second gas guide 42, in an embodiment of the present invention, the step of arranging the second gas guide 42 in the gap between the top surface of the battery module 1 and the top surface of the accommodating cavity 21 may include:
first arranging the second gas guide 42 on the top surface of the battery module 1, and then connecting the upper cover 24 to the lower housing 23, where a part of the inner wall of the upper cover 24 is configured as the top surface of the accommodating cavity 21.

In other words, the second gas guide 42 can be first fixed (e.g., adhered) to the top surface of the battery module 1, and the second gas guide 42 fixed to a top surface of the second glue filling portion 32 can be easily installed in the battery pack 100, which contributes to improving the assembly efficiency of the battery pack 100.

In an embodiment of the present invention, the step of arranging the second gas guide 42 in the gap between the top surface of the battery module 1 and the top surface of the accommodating cavity 21 may include:
first arranging (e.g., adhering) the second gas guide 42 on an inner wall, configured as the top surface of the accommodating cavity 21, of the upper cover 24, and then connecting the upper cover 24 to the lower housing 23.

Since the second gas guide 42 is arranged on the upper cover, on the one hand, the second gas guide 42 disposed on the upper cover 24 of the case 2 is not easily contacted with the glue solution during the glue filling process, effectively avoiding the situation that the glue solution adheres to the second gas guide 42, which affects the normal use of the second gas guide 42; on the other hand, the second gas guide 42 arranged on the upper cover 24 of the case 2 is also not affected by the glue filling scheme; the mounting of the second gas guide 42 can be achieved without waiting for the glue solution to solidify; and the versatility is high.

In order to improve the gas storage and/or gas guiding effect of the second gas guide 42, in some examples, a plurality of second gas guides 42 are provided, and the plurality of second gas guides 42 are arranged between the top surface of the battery module 1 and the top surface of the accommodating cavity 21 at intervals in a first direction.

By dividing the second glue filling portion 32 into the plurality of sub glue filling portions 321 having a smaller cross-sectional area and arranging the plurality of second gas guides 42 at intervals between the plurality of sub glue filling portions 321, the gas guiding and/or exhaust effect of the second gas guides 42 can be improved, further avoiding the occurrence of the phenomenon of "gas trapping" in the battery pack 100.

For an embodiment in which a plurality of second gas guides 42 are provided, in order to fill a glue into the gap between the top surface of the battery module 1 and the top surface of the accommodating cavity 21, the method may include:
filling the glue into a gap between every two adjacent second gas guides 42; and
filling the glue into a gap between the first gas guide 41 and the second gas guides 42 in the first direction.

In this way, the glue solution can flow into the gap between the plurality of second gas guides 42, and can also flow into the gap between the first gas guide 41 and the second gas guide 42, so that the upper cover 24 of the case 2 can be connected to the top surface of the battery module 1, and the strength and rigidity of the battery pack 100 are high.

It should be noted that in the present invention, the first gas guide 41 and the second gas guide 42 have various arrangements, which is not limited in the present invention.

In an embodiment of the present invention, the first gas guide 41 may be disposed in the gap 6, and the second gas guide 42 may be directly disposed on the top surface of the battery module 1, and then the battery pack 100 may be filled with the glue. The first gas guide 41 and the second gas guide 42 can guide the glue solution during the glue filling process, facilitating the glue filling.

In an embodiment of the present invention, the first gas guide 41 may be arranged in the gap 6, and the second gas guide 42 may be arranged on the upper cover 24. In this way, during the glue filling process, the glue solution is not easily contacted with the second gas guide 42, so that the gas guiding effect of the second gas guide 42 can be ensured.

In an embodiment of the present invention, the first gas guide 41 and second gas guide 42 may both be arranged on the upper cover 24, so that during the glue filling process, both the first gas guide 41 and the second gas guide 42 are not easily contacted with the glue solution, so that the gas guiding effect of the first gas guide 41 and the second gas guide 42 can be ensured.

As an embodiment of the present invention, the first gas guide 41 may be arranged on the upper cover 24, and the second gas guide 42 may be arranged on the top surface of the battery module 1, so that the glue solution is not easily contacted with the first gas guide 41 during the glue filling process, and the gas guiding effect of the first gas guide 41 can be ensured.

The preferred embodiments of the present invention are described in detail above with reference to the drawings. However, the present invention is not limited to the specific details in the above embodiments. In the technical concept range of the present invention, the technical solution of the present invention can be subjected to various simple variations, and these simple variations all belong to the protection range of the present invention.

In addition, it should be noted that the specific features described in the above specific embodiments can be combined in any suitable manner without contradiction, and in order to avoid unnecessary repetitions, various possible combination modes are not described any more in the present invention.

In addition, any combination may be made between various embodiments of the present invention, and should also be regarded as the contents disclosed in the present invention as long as it does not depart from the idea of the present invention.

## Claims

1. A battery pack (100), comprising:
a battery module (1);
a case (2) provided with an accommodating cavity (21), wherein the battery module (1) is in the accommodating cavity (21), and a filling cavity (5) is between the battery module (1) and at least part of a side wall (22) of the case (2);
a glue filling structure (3), comprising a first glue filling portion (31) disposed in the filling cavity (5), wherein a gap (6) is between a top surface of the first glue filling portion (31) and a top surface of the accommodating cavity (21); and
a gas guide (4), comprising a first gas guide (41) disposed in the gap (6), wherein the first gas guide (41) is configured to store gas and/or guide gas within the battery pack (100) to an exterior of the battery pack (100).

2. The battery pack according (100) to claim 1, wherein a height of a top surface of the first gas guide (411) is higher than a height of a top surface of the battery module (1); and/or
a height of a bottom surface of the first gas guide (411) is lower than a height of a top surface of the battery module (1).

3. The battery pack (100) according to claim 1 or 2, wherein the case (2) comprises a lower housing (23) and an upper cover (24) connected with a connecting surface (231) located at an upper end of the lower housing (23); and
a height of a top surface of the first gas guide (41) is higher than a height of the connecting surface (231), and a part of an inner wall of the upper cover (24) is configured as the top surface of the accommodating cavity (21).

4. The battery pack (100) according to claim 3, wherein the first gas guide (41) is disposed as a compressible member and abuts between the upper cover (24) and the first glue filling portion (31) in a compressed state in a height direction of the battery pack (100).

5. The battery pack (100) according to any one of claims 1 to 4, wherein an exhaust port (25) is in the case (2) and is configured to communicate with an exhaust passage (401) of the first gas guide (4);
optionally, wherein the case (2) comprises a bottom plate (232) and a frame (233) disposed on the bottom plate (232); and
the gap (6) is between the frame (233) and the battery module (1), and the frame (233) is provided with the exhaust port (25).

6. The battery pack (100) according to any one of claims 1 to 5, wherein a distance between the top surface of the first glue filling portion (31) and the top surface of the accommodating cavity (2) is 5-10 mm.

7. The battery pack (100) according to any one of claims 1 to 6, wherein the first gas guide (41) is adhered to the top surface of the first glue filling portion (31), or the first gas guide (41) is adhered to an inner wall of an upper cover (24) of the case (2).

8. The battery pack (100) according to any one of claim 1 to 7, wherein a lower end of the first gas guide (41) abuts against the top surface of the first glue filling portion (31).

9. The battery pack (100) according to any one of claim 1 to 8, further comprising a second glue filling portion (32) and a second gas guide (42), wherein
both the second glue filling portion (32) and the second gas guide (42) are between a top surface of the battery module (1) and an upper cover (24) of the case (2); and
the second gas guide (42) is connected to the first gas guide (41) such that a gas passage (401) of the second gas guide (42) can communicate with a gas passage (401) of the first gas guide (41);
optionally wherein the second gas guide (42) is adhered to the top surface of the battery module (1), or the second gas guide (42) is adhered to an inner wall of the upper cover (24) of the case (2).

10. The battery pack (100) according to claim 9, wherein a plurality of second gas guides (42) are provided and are arranged between the top surface of the battery module (1) and the upper cover (24) at intervals; and
the second glue filling portion (32) comprises a plurality of sub glue filling portions (321), and one of the sub glue filling portions (321) is between every two adjacent second gas guides (42);
optionally, wherein a sum of areas of projections of the plurality of sub glue filling portions (321) in a height direction of the battery pack is A1, an area of a projection of the top surface of the battery module (1) in the height direction of the battery pack is A2, and the A1 and the A2 satisfy: A1≥0.9A2.

11. The battery pack (100) according to claim 10, wherein the plurality of second gas guides (42) are disposed at intervals in a first direction;
the gap (6) comprises two first gaps (61) arranged at two sides of the battery pack (100) located in a second direction;
the first gas guide (41) is arranged inside the two first gaps (61), and the sub glue filling portions (321) are also disposed between the first gas guide (411) and the second gas guides (42) in the first direction; and
both ends of the plurality of second gas guides (42) in the second direction are connected to the first gas guide (41), and the first direction intersects with the second direction.

12. The battery pack (100) according to claim 11, wherein the gap (6) further comprises two second gaps (62) arranged on both sides of the battery pack (100) in the first direction; and
the first gas guide (41) is disposed inside the two second gaps (62);
optionally, wherein the two first gaps (61) and the two second gaps (62) are connected to each other to be configured as an annular gap; and
the first gas guide (41) is an annular member, or the first gas guide (41) is formed by splicing a plurality of first sub gas guides (411).

13. The battery pack (100) according to any one of claims 1-12, wherein the gas guide (4) is provided with a gas passage (401); and
the gas passage (401) is configured to allow gas to flow through and/or to store gas;
optionally, wherein the gas guide (4) is a foam member provided with a plurality of gas holes, and the gas holes are configured as the gas passage (401);
optionally, wherein the foam member has a porosity of 85% or more.

14. An electric device (1000), comprising the battery pack (100) according to any one of claims 1-13.

15. A method for assembling a battery pack (100), comprising:
providing (S100) a battery module (1), a glue, a first gas guide (41) and a case (2), wherein the case (2) is provided with an accommodating cavity (21);
mounting (S200) the battery module (1) in the accommodating cavity (21), wherein a filling cavity (5) is between the battery module (1) and at least part of a side wall (22) of the case (2);
filling (S300) the glue into the filling cavity (5) to form a first glue filling portion (31) within the filling cavity (5); and
arranging (S400) the first gas guide (41) in a gap (6) between a top surface of the first glue filling portion (31) and a top surface of the accommodating cavity (21), wherein
the first gas guide (41) is configured to store gas and/or guide gas within the battery pack (100) to an exterior of the battery pack (100);
optionally, wherein the case (2) comprises a lower housing (23) and an upper cover (24) configured to define the accommodating cavity (21) together with the lower housing (23), and
arranging the first gas guide (41) in the gap (6) between the top surface of the first glue filling portion (31) and a top surface of the accommodating cavity (21) comprises:
first arranging the first gas guide (41) on the top surface of the first glue filling portion (31), and then connecting the upper cover (24) to the lower housing (23), wherein a part of an inner wall of the upper cover (24) is configured as the top surface of the accommodating cavity (21); or
first arranging the first gas guide (41) on an inner wall, configured as the top surface of the accommodating cavity (21), of the upper cover (24), and then connecting the upper cover (24) to the lower housing (23);
optionally, the method further comprising:
providing a second gas guide (42);
arranging the second gas guide (42) in a gap between a top surface of the battery module (11) and the top surface of the accommodating cavity (21), and allowing a gas passage (401) of the second gas guide (42) to communicate with a gas passage (401) of the first gas guide (41); and
filling a glue into the gap between the top surface of the battery module (1) and the top surface of the accommodating cavity (21) to form a second glue filling portion (32);
optionally, wherein the case (2) further comprises an upper cover (24) and a lower housing (23), wherein the upper cover (24) and the lower housing (23) can jointly define the accommodating cavity (21), and
arranging the second gas guide (42) in the gap between the top surface of the battery module (1) and the top surface of the accommodating cavity (21) comprises:
first arranging the second gas guide (42) on the top surface of the battery module (1), and then connecting the upper cover (24) to the lower housing (23), wherein a part of an inner wall of the upper cover (24) is configured as the top surface of the accommodating cavity (21); or
first arranging the second gas guide (42) on an inner wall, configured as the top surface of the accommodating cavity (21), of the upper cover (24), and then connecting the upper cover (24) to the lower housing (23);
optionally, wherein a plurality of second gas guides (42) are provided and are arranged between the top surface of the battery module (1) and the top surface of the accommodating cavity (21) at intervals in a first direction, and
filling the glue into the gap between the top surface of the battery module (1) and the top surface of the accommodating cavity (21) comprises:
filling the glue into a gap between every two adjacent second gas guides (42); and
filling the glue into a gap between the first gas guide (41) and the second gas guides (42) in the first direction.
